# EUROPEAN PATENT APPLICATION

(11) **EP 2 930 681 A1**
(43) Date of publication of application: **14.10.2015**
(21) Application number: 15151825.5
(22) Date of filing: 20.01.2015
(51) Int. Cl.: G06Q 30/06, G06Q 50/30

(54) **Transportation boarding system using geotagging and mobile devices**

(30) Priority: 11.04.2014 US 201414251215
(71) Applicant: Fujitsu Limited, Kawasaki-shi, Kanagawa 211-8588 (JP)
(72) Inventor: Michishita, Hiroshi, Sunnyvale, CA 94085 (US); Tomono, Mitsuru, Sunnyvale, CA 94085 (US)
(74) Representative: Wilding, Frances Ward

(57) **Abstract**

Methods and systems for bus boarding use geotags that are generated when a mobile device of a bus passenger passes in proximity to embark gates and disembark gates installed in buses of a bus system. The mobile device may be registered with a customer information database of the bus system and may provide a bus passenger identifier to identify the bus passenger at a time and a location when embark geotags and disembark geotags for a bus trip are generated. The embark and disembark geotags may be used to charge the bus passenger for the bus trip.

## Description

The present disclosure relates to transportation boarding systems and, specifically, to a transportation boarding system using geotagging and mobile devices.

Conventional payment systems for public transportation fares, such as bus fares, include the use of near-field communication (NFC) devices which respond to user input to register an embark and/or disembark event. However, such passive devices may still rely on user actions to properly register a bus fare, which may be inconvenient for users. For example, when a user forgets to input a disembark event, no other record of the disembark event may be available, potentially resulting in charging of a maximum fare when a lower fare would actually be applicable.

Therefore, there is a need in the art for a transportation boarding system that is convenient for passengers to use and that correctly registers actual trips made by passengers.

An embodiment of an aspect of the invention provides a method for bus boarding includes detecting, at an embark gate of a first bus, a physical indicator that a passenger is boarding the first bus at a first time corresponding to a first location of the first bus, and receiving, at the embark gate, a bus passenger identifier from a mobile device associated with the passenger. Using the first location, the first time, and the bus passenger identifier, the method may include generating an embark geotag for the passenger and receiving, at a disembark gate of the first bus, the bus passenger identifier from the mobile device at a second time corresponding to a second location of the first bus. Using the second location, the second time, and the bus passenger identifier, the method may further include generating a disembark geotag for the passenger. Based on the embark geotag and the disembark geotag, the method may also include charging the passenger for bus fare corresponding to a bus trip on the first bus between the first location and the second location.

Additional disclosed aspects for transportation system boarding using geotags and mobile devices include a mobile device for bus boarding and a bus system.
The invention is described, by way of example only, with reference to the following drawings, in which:
FIG. 1 is a block diagram of selected elements of an embodiment of a bus system for bus boarding using geotags and mobile devices;
FIG. 2 is a block diagram of selected elements of an embodiment of a bus system for bus boarding using geotags and mobile devices;
FIG. 3 is a flowchart depicting selected elements of an embodiment of a method for bus boarding using geotags and mobile devices;
FIG. 4 is a block diagram of selected elements of an embodiment of a bus system server; and
FIG. 5 is a flowchart depicting selected elements of an embodiment of a method for bus boarding using geotags and mobile devices.

In the following description, details are set forth by way of example to facilitate discussion of the disclosed subject matter. It should be apparent to a person of ordinary skill in the field, however, that the disclosed embodiments are exemplary and not exhaustive of all possible embodiments.

As used herein, a hyphenated form of a reference numeral refers to a specific instance of an element and the un-hyphenated form of the reference numeral refers to the collective or generic element. Thus, for example, widget "72-1" refers to an instance of a widget class, which may be referred to collectively as widgets "72" and any one of which may be referred to generically as a widget "72".

As disclosed herein, a transportation boarding system is described using an example of a bus boarding system for descriptive clarity and ease of understanding. However, it will be understood that various other types of transportation systems other than bus systems may be equipped with the functionality described herein. For example, the methods and systems described herein with respect to a bus system may be implemented for other types of transportation vehicles, such as street cars, street trains, trains, ships, boats, taxis, among other examples.

As will be described in further detail herein, a transportation boarding system using geotagging and mobile devices is disclosed that does not rely on explicit actions by a passenger, such as a user input to register an embark event and/or a disembark event on a transportation vehicle, such as a bus, a street car, or a train. The methods described herein permit a passenger to keep a mobile device, such as a smartphone, in their possession and ride a transportation vehicle for a desired trip without taking any further action. The mobile device, in conjunction with embark and disembark gates mounted on the transportation system infrastructure, may automatically register when the passenger embarks and disembarks a transportation vehicle, and may charge the passenger the commensurate fare for the actual trip taken. The mobile device may be registered in advance by the passenger with the transportation system and subsequently may be ready to operate with the transportation system.

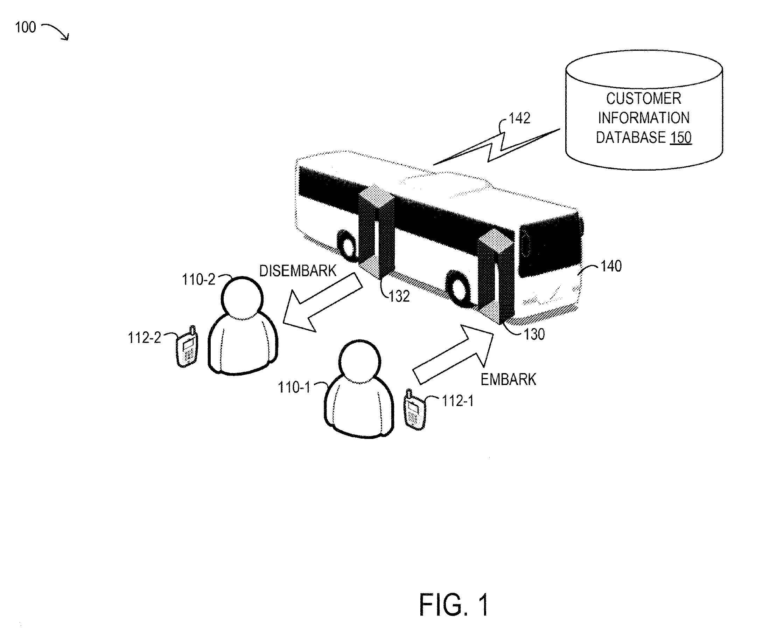

Turning now to the drawings, FIG. 1 is a block diagram showing selected elements of an embodiment of bus system 100. As will be described in further detail, bus system 100 may enable bus boarding using geotagging and mobile devices. Bus system 100 may represent certain portions of a bus system operated by a transportation services entity, such as a municipal or other government entity. Certain portions of bus system 100, as described herein, may be operated by third parties or other entities, in various embodiments.

As shown in FIG. 1, bus system 100 may include a plurality of buses (not shown) including first bus 140 that may operate on a route and that stops at specific locations at specific times. As shown, first bus 140 may be representative of any arbitrary instance of a bus in the plurality of buses operated with bus system 100. As shown, first bus 140 may be equipped with embark gate 130 and disembark gate 132, which may represent respective gates through which passengers embark and disembark from first bus 140. Although depicted as being externally visible in FIG. 1 for descriptive clarity, it is noted that embark gate 130 and/or disembark gate 132 may be mechanically integrated into sections of first bus 140 and may accordingly be hidden to a certain extent. As shown, first bus 140 may also be equipped with a wireless interface to support wireless link 142 to customer information database 150, representing a centralized infrastructure for bus system 100 and the plurality of buses, including first bus 140, served therewith.

In operation of bus system 100, bus passengers 110 may embark and disembark first bus 140 to arrive at their desired destinations. Prior to riding first bus 140 or another bus operated with bus system 100, bus passenger 110 may register mobile device 112 that is associated with bus passenger 110 with customer information database 150. Once registered, mobile device 112 may be configured to output a bus passenger identifier to embark gate 130 and disembark gate 132 when bus passenger 110 in physical possession of mobile device 112 comes within a prescribed proximity of embark gate 130 and/or disembark gate 132. The bus passenger identifier may be a unique identifier associated with a particular bus passenger 110, and may be usable to authenticate that the particular bus passenger 110 was at a given location at a given time, by virtue of the association of mobile device 112 with the particular bus passenger 110. In one embodiment, embark gate 130 and/or disembark gate 132 may be equipped with a wireless network interface that communicates with a wireless interface included in mobile device 112 to transmit the bus passenger identifier from mobile device 112.

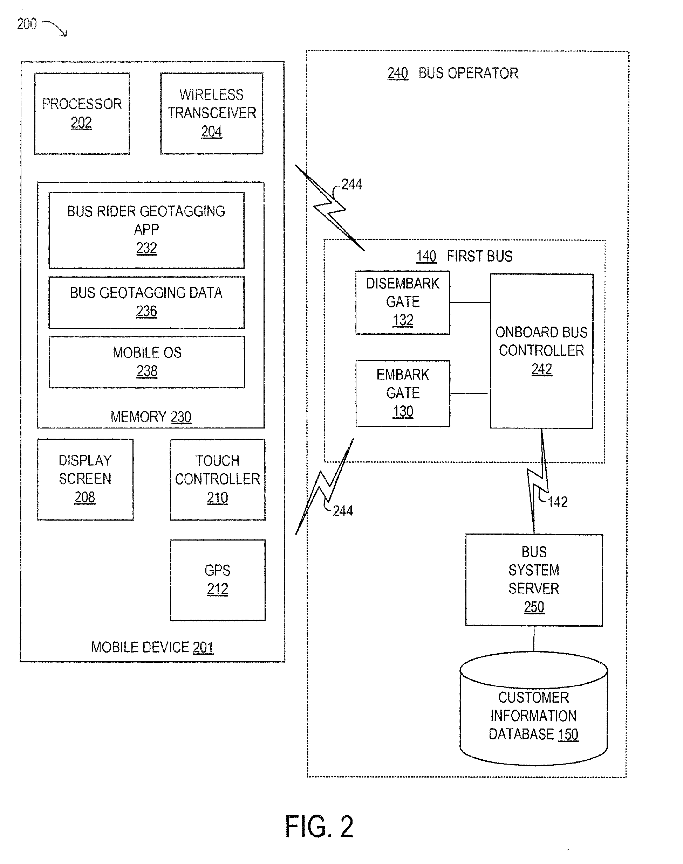

In another embodiment, the bus passenger identifier may be written to a radio-frequency identification (RFID) tag included within mobile device 112. A corresponding RFID reader included with embark gate 130 and/or disembark gate 132 may then register the bus passenger identifier when mobile device 112 comes within a suitable proximity. In given embodiments, additional bus boarding functionality may be implemented. For example, when RFID tags are used, certain bus stops may be equipped with a secured perimeter within which a wireless network interface for communicating with mobile device 112 may be active. When bus passengers 110 and their respective mobile devices 112 enter the secured perimeter, mobile device 112 may connect with customer information database 150 to verify user information and/or that the user is registered. It is noted that an app for bus boarding may be provided to bus passenger 110 to install on mobile device 112 for functionality described herein with respect to mobile device 112 (see also FIG. 2, item 232).

Specifically, in FIG. 1, bus passenger 110-1 may desire to ride first bus 140 at a first time corresponding to a first location and may carry mobile device 112-1. Prior to riding first bus 140, bus passenger 110-1 may have registered mobile device 112-1 with customer information database 150 and may have correspondingly obtained a bus passenger identifier. It is noted that bus passenger 110-1 may be unaware of an exact value for the bus passenger identifier (not shown), which may remain hidden from bus passenger 110-1 for security purposes, but may still be used by mobile device 112-1 and customer information database 150 to enable bus passenger 110-1 to ride first bus 140. As bus passenger 110-1 approaches embark gate 130 and mobile device 112-1 comes within proximity of embark gate 130, embark gate 130 may receive the bus passenger identifier from mobile device 112-1. In given embodiments, embark gate 130 may be equipped with means to detect a physical indicator that a person, namely bus passenger 110-1, has entered embark gate 130 and may expect to receive the bus passenger identifier within a predetermined delay from the detection of the physical indicator. In particular embodiments, the physical indicator is a weight value received from a scale (not shown) mounted at a floor portion of embark gate 130. When the bus passenger identifier is not received within the predetermined delay, a passenger alarm may be issued, for example, to alert a bus driver or other personnel in first bus 140. In this manner, only those bus passengers who may be subject to manual payment or who may not be in possession of a registered mobile device may be alerted to bus personnel for payment processing upon boarding first bus 140. After the bus passenger identifier is received for bus passenger 110-1 at embark gate 130, an embark geotag (not shown) may be generated and recorded at customer information database 150. The embark geotag may specify that bus passenger 110-1 boarded first bus 140 at the first time and at the first location. In some embodiments, the first location and/or the first time may be generated by a controller included within first bus 140, for example, that is equipped with a global positioning system (GPS) sensor. In other embodiments, the first location and/or the first time may be received by customer information database 150 from mobile device 112-1 that is equipped with a GPS sensor. The embark geotag may thus record an embark event for bus passenger 110-1 upon boarding first bus 140, without bus passenger 110-1 having to remember to take any explicit action.

Then, bus passenger 110-2, representing an arbitrary bus passenger who has already boarded first bus 140 and who carries respective mobile device 112-2, may desire to disembark first bus 140 at a second time corresponding to a second location. It is assumed that an embark geotag was generated for bus passenger 110-2 and mobile device 112-2 in a substantially similar manner as described above with respect to bus passenger 110-1 and mobile device 110-1. As bus passenger 110-2 approached disembark gate 132 and mobile device 112-2 comes within proximity of disembark gate 132, disembark gate 132 may receive a bus passenger identifier associated with bus passenger 110-2. After the bus passenger identifier is received for bus passenger 110-2 at disembark gate 132, a disembark geotag (not shown) may be generated and recorded at customer information database 150. The disembark geotag may specify that bus passenger 110-2 deboarded first bus 140 at the second time and at the second location. The location information for the disembark geotag may be generated according to the embodiments discussed above with respect to the embark geotag. The disembark geotag may thus record a disembark event for bus passenger 110-2 upon deboarding first bus 140, without bus passenger 110-2 having to remember to take any explicit action. Additionally, upon generation of the disembark geotag and further based on the embark geotag for bus passenger 110-2, a fare charge for the bus trip between the first time/the first location and the second time/the second location may be charged to bus passenger 110-2. In certain embodiments, location information for first bus 140 may be used to validate that an actual path taken by first bus 140 corresponds to the first time/the first location and the second time/the second location. It is noted that any type of fare scheme may be applied to the fare charge, including fare schemes offered using existing ticketing plans, including, but not limited to: single trip fares, multiple trip fares, daily fares, weekly fares, monthly fares, tourist fares, special fares, etc. Bus passenger 110-2 may further receive an indication of the fare charge for the bus trip. In certain embodiments, bus passenger 110-2 may send a request using mobile device 112-2 for confirmation of the bus trip and may receive location and/or time information, based on the embark geotag and the disembark geotag, from customer information database 150, accordingly.

Referring now to FIG. 2, a block diagram of selected elements of an embodiment of bus system 200 is depicted. Bus system 200 may represent an embodiment of bus system 100 (see FIG. 1) in which further elements and additional detail is depicted.

Specifically, bus system 200 is shown including mobile device 201, which may represent any of a variety of mobile devices with communication and data processing capability. Mobile device 201 may represent an embodiment of mobile device 112 (see FIG. 1). In various embodiments, mobile device 201 is a smart phone that may include various functionality selected from: cellular telephony, wireless networking, location sensing, motion sensing, digital imaging (*i.e.,* a camera), touch screen operation, multimedia playback, data storage, among others. In certain embodiments, mobile device 201 may include, or may represent, a wearable device that may be worn on the body of a user and/or may be integrated into an article of clothing of a user (not shown). Accordingly, while certain aspects of mobile device 201 are shown in FIG. 2 for descriptive purposes, it will be understood that, in different embodiments, mobile device 201 may include different types of functionality.

As shown in FIG. 2, mobile device 201 includes processor 202 and memory 230 that may store data and/or instructions executable by processor 202. Memory 230 is shown including mobile OS 238, which may represent a mobile operating system being executed by processor 202. Examples of instances of mobile OS 238 include iOS (Apple Inc.) and Android™ (Google Inc.). Also, memory 230 may store bus rider geotagging app 232 that is executable by processor 202 to enable bus boarding functionality, as described herein. Memory 230 may also store bus geotagging data 236, that may include location data for a user (not shown in FIG. 2, see FIG. 1) of mobile device 201, as well as other data, such as a bus passenger identifier, in conjunction with bus boarding, as described herein. The location data may be generated using mobile device 201 or may be received from customer information database 150. It is noted that various apps executing on mobile device 201 may be configured to access diverse types of functionality included with mobile device 201, such as, but not limited to, imaging, communication, location-based services, gestures, touch input, motion of mobile device 201, Internet-connectivity, etc.

In FIG. 2, mobile device 201 may include at least one instance of wireless transceiver 204, which may provide wireless connectivity to various types of wireless networks, such as cellular telephony networks (e.g., 3G, 4G, LTE), wireless local area networks (*e.g.,* IEEE 802.11), wireless personal area networks (e.g., Bluetooth®), among others. Display screen 208 and touch controller 210 may operate in combination to provide a touch-screen display for output to and control by the user. Mobile device 201 is also shown including at least one instance of GPS 212, which may be used to generate location data. It is noted that in certain embodiments, mobile device 201 may not include GPS 212, or may not rely upon GPS 212 when present, for location data.

Also in FIG. 2, mobile device 201 is shown interacting with wireless link 244 representing wireless connectivity with disembark gate 132 and/or embark gate 130 included in first bus 140, representing an arbitrary instance of a plurality of buses included within infrastructure labeled as bus operator 240, representing a transportation entity operating bus system 200 (see also bus system 100, FIG. 1). In FIG. 2, first bus 140 is shown including onboard bus controller 242, which may comprise a processor, memory media, and a wireless interface for supporting wireless link 142 to bus system server 250. As shown, bus system server 250 may host customer information database 150, mentioned previously.

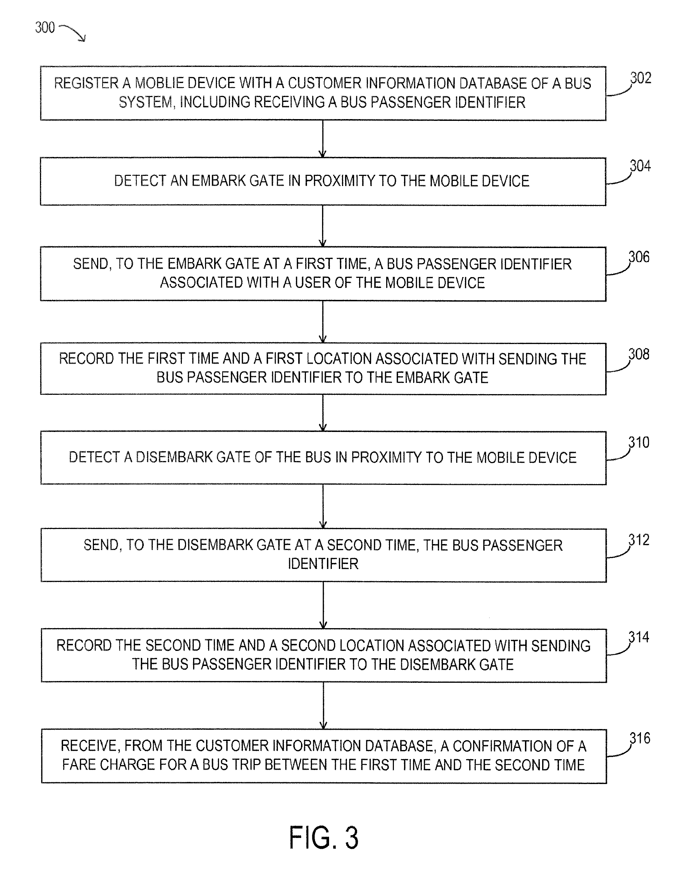

Turning now to FIG. 3, a block diagram of selected elements of an embodiment of method 300 for bus boarding is depicted in flow-chart form. Method 300 may be performed by bus rider geotagging app 232 at mobile device 201 (see FIG. 2), for example, in conjunction with customer information database 150 (see FIGS. 1 and 2). It is noted that certain operations described in method 300 may be optional or may be rearranged in different embodiments.

Method 300 may begin by registering (operation 302) a mobile device with a customer information database of a bus system, including receiving a bus passenger identifier. The bus passenger identifier may be unique to a user who is a prospective bus passenger and in possession of the mobile device. An embark gate may be detected (operation 304) in proximity to the mobile device. Operation 304 may be performed when the user boards a bus of the bus system in which the embark gate is installed and operating. A bus passenger identifier associated with a user of the mobile device may be sent (operation 306) to the embark gate at a first time. The first time and a first location associated with sending the bus passenger identifier to the embark gate may be recorded (operation 308). The first location may be obtained from a GPS sensor included with the mobile device. Then, a disembark gate may be detected (operation 310) in proximity to the mobile device. The disembark gate may be detected in operation 310 when the user decides to exit the bus at the disembark gate. The bus passenger identifier may be sent (operation 312) at a second time to the disembark gate. The second time and a second location associated with sending the bus passenger identifier to the disembark gate may be recorded (operation 314). Then, a confirmation of a fare charge for a bus trip between the first time and the second time may be received (operation 316) from the customer information database.

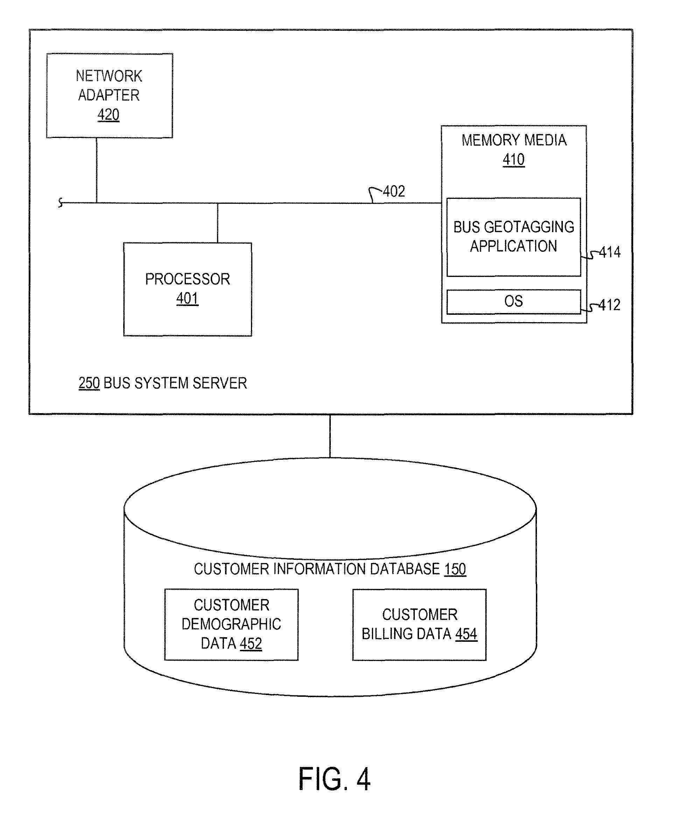

Referring now to FIG. 4, a block diagram showing selected elements of an embodiment of bus system server 250 is illustrated. As depicted in FIG. 4, bus system server 250 includes processor 401 and memory media 410, which may communicate using system bus 402. Also shown accessible via system bus 402 is network adapter 420 that may provide connectivity to a network.

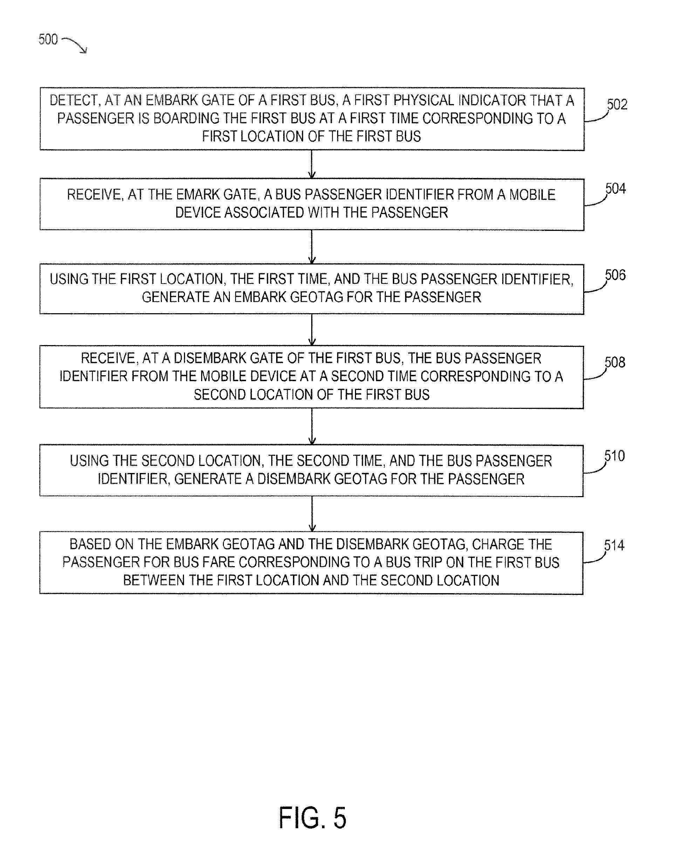

As shown in FIG. 4, memory media 410 may represent volatile, non-volatile, fixed, and/or removable media, and may be implemented using magnetic and/or semiconductor memory. Memory media 410 is capable of storing instructions and/or data. As shown, memory media 410 stores instructions (*i.e.,* code executable by processor 401) including operating system (OS) 412 and bus geotagging application 414. Operating system 412 may be any of a variety of operating systems, such as a UNIX variant, LINUX, a Microsoft Windows® operating system, or a different operating system. Bus geotagging application 414 may embody various applications and functionality, for example, as described in method 500 (see FIG. 5). Also shown in FIG. 4 is customer information database 150, which may be hosted by bus system server 250 for providing structured data storage. Customer information database 150 may store customer demographic data 452 and customer billing data 454 for a plurality of bus passengers. It is noted that, in certain embodiments, customer information database 150 may be included with bus system server 250.

Turning now to FIG. 5, a block diagram of selected elements of an embodiment of method 500 for bus boarding is depicted in flow-chart form. Method 500 may be performed by bus geotagging application 414 at bus system server 250 (see FIG. 4), for example, in conjunction with mobile device 201 (see FIG. 2), as described previously herein. It is noted that certain operations described in method 500 may be optional or may be rearranged in different embodiments.

Method 500 may begin by detecting (operation 502), at an embark gate of a first bus, a first physical indicator that a passenger is boarding the first bus at a first time corresponding to a first location of the first bus. A bus passenger identifier may be received (operation 504) at the embark gate from a mobile device associated with the passenger. Using the first location, the first time, and the bus passenger identifier, an embark geotag may be generated (operation 506) for the passenger. The bus passenger identifier may be received (operation 508) at a disembark gate of the first bus at a second time corresponding to a second location of the first bus. Using the second location, the second time, and the bus passenger identifier, a disembark geotag may be generated (operation 510) for the passenger. Based on the embark geotag and the disembark geotag, the passenger may be charged (operation 514) for bus fare corresponding to a bus trip on the first bus between the first location and the second location.

As disclosed herein, methods and systems for bus boarding use geotags that are generated when a mobile device of a bus passenger passes in proximity to embark gates and disembark gates installed in buses of a bus system. The mobile device may be registered with a customer information database of the bus system and may provide a bus passenger identifier to identify the bus passenger at a time and a location when embark geotags and disembark geotags for a bus trip are generated. The embark and disembark geotags may be used to charge the bus passenger for the bus trip.

The above disclosed subject matter is to be considered illustrative, and not restrictive, and the appended claims are intended to cover all such modifications, enhancements, and other embodiments which fall within the scope of the present disclosure. The scope of the present invention is defined by the claims.

## Claims

1. A method for monitoring bus boarding, comprising:
detecting, at an embark gate of a first bus, a physical indicator that a passenger is boarding the first bus at a first time corresponding to a first location of the first bus;
receiving, at the embark gate, a bus passenger identifier from a mobile device associated with the passenger;
using the first location, the first time, and the bus passenger identifier, generating an embark geotag for the passenger;
receiving, at a disembark gate of the first bus, the bus passenger identifier from the mobile device at a second time corresponding to a second location of the first bus;
using the second location, the second time, and the bus passenger identifier, generating a disembark geotag for the passenger; and
based on the embark geotag and the disembark geotag, charging the passenger for bus fare corresponding to a bus trip on the first bus between the first location and the second location.

2. The method of claim 1, further comprising:
storing the embark geotag and the disembark geotag in a customer information database for a bus system operating a plurality of buses, including the first bus, preferably wherein the method further comprises:
validating that the mobile device is registered with the customer information database; and
when the mobile device is not registered with the customer information database, generating a passenger alarm after the physical indicator is detected.

3. The method of any of claims 1 and 2, wherein the physical indicator is a weight measurement at the embark gate, and further comprising:
after detecting the physical indicator, when the bus passenger identifier is not received at the embark gate within a predetermined delay, generating a passenger alarm.

4. The method of any of claims 1 to 3, wherein the bus passenger identifier is received wirelessly from the mobile device, and wherein location information for a geotag is received from the mobile device.

5. The method of any of claims 1 to 4, further comprising:
prior to charging the passenger, confirming that the bus trip coincides in location and time with a path taken by the first bus, and/or, in response to a request from the mobile device, sending information associated with the bus trip to the mobile device.

6. A mobile device for monitoring bus boarding, comprising:
a processor having access to memory media, the memory media storing processor-executable instructions that, when executed by the processor, cause the processor to:
detect an embark gate of a bus in proximity to the mobile device;
send, to the embark gate at a first time, a bus passenger identifier associated with a user of the mobile device;
detect a disembark gate of the bus in proximity to the mobile device; and
send, to the disembark gate at a second time, the bus passenger identifier, wherein the bus passenger identifier is registered with a customer information database of a bus system operating the bus.

7. The mobile device of claim 6, further comprising instructions to:
record the first time and a first location associated with the instructions to send the bus passenger identifier to the embark gate; and
record the second time and a second location associated with the instructions to send the bus passenger identifier to the disembark gate.

8. The mobile device of any of claims 6 and 7, further comprising instructions to:
receive, from the customer information database, a confirmation of a bus trip between the first time and the second time, preferably comprising instructions to:
receive, from the customer information database, a confirmation of a fare charge for the bus trip.

9. The mobile device of any of claims 6 to 8, further comprising instructions to:
register the mobile device with the customer information database, including instructions to receive the bus passenger identifier.

10. A method for monitoring bus boarding, comprising:
detecting, at an embark gate of a first bus, a physical indicator that a passenger is boarding the bus at a first time corresponding to a first location of the bus;
sending a bus passenger identifier to the embark gate from a mobile device associated with the passenger;
responsive to receiving the bus passenger identifier via the embark gate and using the first location, the first time, and the bus passenger identifier, generating, at a customer information database associated with a bus system, an embark geotag for the passenger;
sending the bus passenger identifier to a disembark gate of the first bus from the mobile device at a second time corresponding to a second location of the first bus;
responsive to receiving the bus passenger identifier via the disembark gate and using the second location, the second time, and the bus passenger identifier, generating, at the customer information database, a disembark geotag for the passenger; and
based on the embark geotag and the disembark geotag, charging the passenger for bus fare corresponding to a bus trip on the first bus between the first location and the second location.

11. The method of claim 10, further comprising:
registering the mobile device with the customer information database, including generating the bus passenger identifier; and
sending the bus passenger identifier to the mobile device.

12. The method of any of claims 10 and 11, further comprising:
storing the embark geotag and the disembark geotag in the customer information database, wherein the bus system operates a plurality of buses, including the first bus, preferably wherein the method further comprises:
validating that the mobile device is registered with the customer information database; and
when the mobile device is not registered with the customer information database, generating a passenger alarm.

13. The method of any of claims 10 to 12, wherein the physical indicator is a weight measurement at the embark gate, and further comprising:
after detecting the physical indicator, when the bus passenger identifier is not received at the embark gate within a predetermined delay, generating a passenger alarm.

14. The method of any of claims 10 to 13, wherein mobile device wirelessly sends the bus passenger identifier, and further comprising:
sending location information for a geotag by the mobile device.

15. The method of any of claims 10 to 14, further comprising:
prior to charging the passenger, confirming that the bus trip coincides in location and time with a path taken by the first bus, and/or:
sending a request from the mobile device for details of the bus trip; and
responsive to the request from the mobile device, sending, from the customer information database, information associated with the bus trip to the mobile device.
